# EUROPEAN PATENT APPLICATION

(11) **EP 3 722 383 A1**
(43) Date of publication of application: **14.10.2020**
(21) Application number: 19167836.6
(22) Date of filing: 08.04.2019
(51) Int. Cl.: C09D 161/28, C08L 61/28, C09D 133/12, C08F 220/18

(54) **FLOOR COATING COMPOSITION HAVING IMPROVED ADHESION AND METHODS RELATED THERETO**

(71) Applicant: SIKA TECHNOLOGY AG, 6340 Baar (CH)
(72) Inventor: Turner, Jeff, C7040 Maplewood (US)
(74) Representative: Sika Patent Attorneys

(57) **Abstract**

The present invention relates to a multi-component composition containing at least one poly(meth)acrylate polyol PA and at least one melamine formaldehyde resin. The multi-component composition further comprises at least one catalyst and core-shell particles. The multi-component composition is used in applications related to floor substrate preferably a bowling lane for forming a top coat exhibiting impact resistance, low coefficient of friction and excellent adhesion to the substrate.

## Description

### Technical field

The present invention relates to a coating composition for forming a top coat, having impact resistance, low coefficient of friction and excellent adhesion to a substrate, preferably a floor substrate.

### Background

Protective coatings are applied on variety of floor substrates including bowling lane surfaces. These coatings are applied on substrates made of melamine formaldehyde resin, metal, epoxy, polyurethane and polyurea systems. Coatings provide aesthetic quality and long-term durability to the substrates.

Bowling lane surfaces suffer high damage due to the frequent and heavy impact from bowling balls and flying pins. Coatings used on the bowling lane surfaces should provide abrasion resistance, impact resistance and good adherence. Coatings must also provide correct slippage or low coefficient of friction between the bowling lane surfaces and balls.
Bowling lane surfaces are commonly made up of wood such as maple wood. Bowling lanes made up of wood provide soft and rough surfaces. Such wooden lanes are coated with lacquer finish. However, the lacquer finish wears down quickly and is highly flammable during resurfacing jobs. Polyurethane coating has replaced the lacquer finish, since the polyurethane coating is less flammable and less expensive. Polyurethane coatings are hard, durable, and easy to handle and apply. However, they are still are not very suitable for use with bowling surfaces due to a high coefficient of friction. The surfaces finished with polyurethane are periodically conditioned with oil in order to reduce wear and to adjust the slip qualities of the surfaces.

Being softer, wooden bowling lanes can be very easily damaged. When the coatings wear down, wooden bowling lanes start to wear at fast rates and oil rapidly wicks down into the wood. To repair the wooden lanes, resurfacing job is performed periodically. During a resurfacing job, large sanders are used to cut the old coatings, filler is used to smooth down the irregularities of wooden surface and oil absorbent is used to remove any oil that soaked into the wood. In the end, coating is re-applied to the smoothed bowling lanes. Resurfacing job is very costly and time consuming.

Wooden bowling lanes are now being replaced with synthetic lanes made up of melamine laminate. Synthetic lanes are exceptionally hard and provide a low coefficient of friction. This causes oil to stay on lane surfaces for longer time and helps in decreasing the wear caused by the moving balls. Further, synthetic lanes are cheaper to install and easier to maintain than wooden ones as no re-surfacing is required. The melamine laminate is translucent and gives the appearance of wood.

It is highly desirable to provide a coating composition for melamine laminate in order to further improve the performance of bowling lane surfaces. The composition should be easy to implement and economically viable. Conventional polyurethane coatings provide poor adherence to melamine laminate. Further, there is a need of a new coating composition to overcome high coefficient of friction and the adherence problem.

### Summary of the invention

The present invention overcomes prior art drawbacks described above, and one of the objects of the present invention is to provide a multi-component coating composition having impact resistance, excellent adherence to a bowling lane surfaces and low coefficient of friction between the bowling lane surface and a ball. Another object of the present invention is to provide a method for preparing a coated substrate.

The present invention refers to a multi-component composition containing 12 - 32 wt.-%, preferably 13.5 - 30 wt.-%, based on the total weight of the multi-component composition, of at least one poly(meth)acrylate polyol PA and 20 - 30 wt.-%, based on the total weight of the multi-component composition, of at least one melamine formaldehyde resin. The multi-component composition further contains at least one catalyst and 1 - 25 wt.-%, preferably 1 - 22 wt.-%, 1 - 15 wt.-%, 1 - 10 wt.-%, 2 - 5 wt.-%, based on the total weight of the multi-component composition, of core shell particles.

In particular, the multi-component composition contains 10 - 70 wt.-%, preferably 20 - 60 wt.-%, 30 - 50 wt.-%, based on the total weight of the multi-component composition, of at least a solvent. Preferably, the solvent is selected from the list containing C3-C20 alkylene glycols and halogenated solvents.

Preferably, the melamine formaldehyde resin comprises methoxymethyl and/or methoxybutyl groups, more preferably methoxymethyl and methoxybutyl groups. Further, the melamine formaldehyde resin is based on hexamethylolmelamine.

Preferably, the weight ratio of the poly(meth)acrylate polyol PA / melamine formaldehyde resin is from 0.33 - 1.5, preferably 0.4 to 1.3

The multi-component composition further comprises the catalyst, preferably an acid catalyst, in proportion of 0.5 - 3.5 wt.-%, preferably 0.5 - 2.5 wt.-%, 1.0 - 2.0 wt.-%, 1.2 - 2.0 wt.-%, based on the total weight of the multi-component composition.

Preferably, the core shell particles are composed of a polysiloxane.

The invention also refers to a method of preparing a coated substrate. The method includes mixing the components of the multi-component composition to obtain a mixture, applying the mixture on a substrate, and allowing the applied mixture to cure to obtain a top coat on the substrate.

Particularly, the substrate is a part of a flooring system, preferably a bowling lane.

Further, the substrate is selected from the list consisting of a melamine formaldehyde resin, a polyurethane, a polyurea, an epoxy resin and a metal, preferably the melamine formaldehyde resin.

### Brief Description of the Figures

Figure 1 depicts the overall construction of a substrate with a multi-component composition in accordance with an embodiment of the present invention.
Figure 2 is a flow chart depicting a method for preparing a coated substrate in accordance with an embodiment of the present invention.

### Detailed description of the Invention

For the purposes of the following detailed description, it is to be understood that the invention may assume various alternative variations and step sequences, except where expressly specified to the contrary.

In the context of the present invention, the following definitions may apply to the terms listed below, unless specified otherwise:
It must be noted that, as used in this specification and the appended claims, the singular forms "a," "an" and "the" include plural referents unless the content clearly dictates otherwise.

The term "substrates" as used herein refers to a part of a flooring system preferably a bowling lane.

A "Multi component composition" refers to a curable composition in the present invention, which are composed of two or more different components stored in separate containers and are storage stable in each case for itself. Shortly before or during the application of the composition, the two or more components are mixed together.

In the context of this invention, the term "curing" means that the composition becomes harder or sets-in because of a chemical change/reaction.

The term "coat" as used herein refers to the multi-component composition is applied to form a top coat and, as such, includes a top enamel finish or a clear finish.

Compound names beginning with "poly" designate substances, which formally contain, per molecule, two or more of the functional groups occurring in their names. Such as a polyol or a poly(meth)acrylate or a polysiloxane.

For instance, polyol is a compound having two or more hydroxy groups.

The term "poly(meth)acrylate polyol PA " as used herein refers to a polyacrylate polyol and/or a polymethacrylate polyol.

The term "siloxane group" as used here in refers to a radical containing at least one siloxane bond designated Si-O-Si.

The term "polysiloxane group" is a siloxane moiety containing multiple "silicon-oxygen backbone" in a row, so Si- (O-Si) s units with s = 2 or more, respectively. Here, a (O-Si) unit as called "siloxane unit".

The term "core-shell particles" as used herein refers to a core containing a crosslinked elastomeric core and a shell containing reactive groups.

The term "additive(s)" used herein refers to comprise a component or agent and the like usually added in smaller amounts (e.g. 1% or 0.2% of the total composition) and yet give a very significant effect on the product. Additives can comprise one or more of defoamer and wax additive. Often, composition and/or coating composition comprises one or more additives.

The term "defoamer" or "anti-foaming agent" as used herein refers to a chemical additive that reduces and hinders the formation of foam in industrial process liquids.

The term "wax additive" as used herein refers to a polyethylene wax additive that acts as surface conditioner and provides scratch resistance.

In a first aspect, the present invention relates to a multi-component composition containing:
a) 12 - 32 wt.-%, preferably 13.5 - 30 wt.-%, based on the total weight of the multi-component composition, of at least one poly(meth)acrylate polyol **PA**; 20 - 30 wt.-% based on the total weight of the multi-component composition, of at least one melamine formaldehyde resin; and
b) at least one catalyst, wherein the multi-component composition further comprises 1 - 25 wt.-%, preferably 1 - 22 wt.-%, 1 - 15 wt.-%, 1 - 10 wt.-%, 2 - 5 wt.-%, core-shell particles, based on the total weight of the multi-component composition.

The present invention refers to a multi-component composition containing 12 - 32 wt.-%, preferably 13.5 - 30 wt.-%, based on the total weight of the multi-component composition, of at least one poly(meth)acrylate polyol **PA** and 20 - 30 wt.-%, based on the total weight of the multi-component composition, of at least one melamine formaldehyde resin. The multi-component composition further contains at least one catalyst and 1 - 25 wt.-%, preferably 1 - 22 wt.-%, 1 - 15 wt.-%, 1 - 10 wt.-%, 2 - 5 wt.-%, based on the total weight of the multi-component composition, of core shell particles.

Preferably, the multi-component composition contains 10 - 70 wt.-%, preferably 20 - 60 wt.-%, 30 - 50 wt.-%, based on the total weight of the multi-component composition, of at least a solvent. Preferably, the solvent is selected from the list containing C3-C20 alkylene glycols and halogenated solvents.

Preferably, the melamine formaldehyde resin comprises methoxymethyl and/or methoxybutyl groups, more preferably methoxymethyl and methoxybutyl groups.

Further, the melamine formaldehyde resin is based on hexamethylolmelamine.

Preferably, the weight ratio of the poly(meth)acrylate polyol PA / melamine formaldehyde resin is from 0.33 - 1.5, preferably 0.4 to 1.3

Preferably the amount of the catalyst, preferably an acid catalyst, in proportion of 0.5 - 3.5 wt.-%, preferably 0.5 - 2.5 wt.-%, 1.0 - 2.0 wt.-%, 1.2 - 2.0 wt.-%, based on the total weight of the multi-component composition.

Preferably, the core of the core shell particles is composed of polysiloxane.

In another aspect the invention also refers to a method of preparing a coated substrate. The method includes mixing the components of the multi-component composition to obtain a mixture, applying the mixture on a substrate, and allowing the applied mixture to cure to obtain a top coat on the substrate.

Particularly, the substrate is a part of a flooring system, preferably a bowling lane.

Further, the substrate is selected from the list consisting of a melamine formaldehyde resin, a polyurethane, a polyurea, an epoxy resin and a metal, preferably the melamine formaldehyde resin.

In the following section, the components of the multi-component composition, used according to the invention, are explained in detail:
polv(meth)acrvlate polyol **PA**

The multi-component composition comprises at least one poly(meth)acrylate polyol **PA.** The expression "poly(meth)acrylate polyol PA" as used herein, refers to a polyacrylate polyol and/or a polymethacrylate polyol. The polyacrylate polyols and the polymethacrylate polyols are obtainable by the polymerization of at least one alkyl acrylate and/or alkyl methacrylate with at least one hydroxyl functional alkyl acrylate and/or hydroxyl functional alkyl methacrylate.

Coatings are formulated with hydroxyl functional acrylic polymer to feature low viscosity with high solids, excellent flow and leveling with acrylic durability.

Examples of suitable monomers for the preparation of the poly(meth)acrylate polyol PA are vinyl or vinylidene monomers, e.g. Styrene, α-methylstyrene, o- or p-chlorostyrene, o-, m- or p-methylstyrene, p-tert-butylstyrene, acrylic acid, acrylonitrile, methacrylonitrile, acrylic and methacrylic esters of alcohols having up to 18 carbon atoms , such as Methylacrylate, ethylacrylate, n-propylacrylate, isopropylacrylate, n-butylacrylate, isobutylacrylate, tert-butylacrylate, amylacrylate, hexylacrylate, 2-ethylhexyl acrylate, isooctylacrylate, 3,3,5-trimethylhexylacrylate, stearylacrylate, laurylacrylate, cyclopentylacrylate, cyclohexylacrylate, 4-tert-butylcyclohexyl acrylate, methyl methacrylate, ethyl methacrylate, n-propyl methacrylate, isopropyl methacrylate, butyl methacrylate, isobutyl methacrylate, tert-butyl methacrylate, amyl methacrylate, hexyl methacrylate, 2-ethylhexyl methacrylate, isooctyl methacrylate, 3,3,5-trimethylhexyl methacrylate , Stearyl methacrylate, lauryl methacrylate, cyclopentyl methacrylate, cyclohexyl methacrylate, 4-tert-Butycyclohexylmethacrylat, diesters of fumaric acid, itaconic acid or maleic acid with 4 to 8 carbon atoms having alcohols, acrylic acid amide, methacrylamide, vinyl esters of alkanemonocarboxylic acids having 2 to 5 carbon atoms, such as. As vinyl acetate or vinyl propionate, hydroxyalkyl esters of acrylic acid or methacrylic acid having 2 to 5 carbon atoms in the hydroxyalkyl radical, such as. B. 2-hydroxyethyl, 2-hydroxypropyl, 3-hydroxypropyl, 3-hydroxy-butyl, 4-hydroxybutyl, trimethylolpropane mono- or pentaerythritol monoacrylate or methacrylate, and any mixtures of such exemplified monomers.

Preferably, the monomers for preparing the poly(meth)acrylate polyol **PA** are selected from the group consisting of 2-ethylhexyl acrylate , styrene, 2-hydroxyethyl (meth) acrylate, 2-hydroxypropyl (meth) acrylate, 3-hydroxypropyl (meth) acrylate, 3-hydroxybutyl (meth) acrylate , 4-hydroxybutyl (meth) acrylate, trimethylolpropane mono (meth) acrylate and pentaerythritol mono (meth) acrylate.

More preferably, the monomers for preparing the polyacrylate polyols **PA** are selected from the group consisting of 2-ethylhexyl acrylate, styrene, 2-hydroxyethyl (meth) acrylate, in particular 2-ethylhexyl acrylate, styrene, 2-hydroxyethyl methacrylate.

Suitable poly(meth)acrylate polyol **PA** are, for example, those having an average molecular weight of 800 to 10,000 g / mol, 1000 to 5000 g / mol, 1500 to 4000 g / mol, preferably from 2000 to 4000 g / mol.

Further, more suitable poly(meth)acrylate polyol PA are, for example, those having OH numbers between 80 mg / KOH g to 200 mg KOH / g, preferably in the range from 100 mg KOH / g to 180 mg KOH / g, and more preferably 120 to 150 mg KOH / g.

The OH number is determined by titrimetry according to DIN53240 in the present application. The hydroxyl number is determined by acetylation with acetic anhydride and subsequent titration of the excess acetic anhydride with alcoholic potassium hydroxide solution.

Advantageously, the poly(meth)acrylate polyol PA has a hydroxyl group content of 2 to 6, more preferably from 3 to 5.

Advantageously, the poly(meth)acrylate polyol PA has an OH equivalent weight of 300-800, in particular 350-600, more particularly 350-500.

For example, Joncryl 507, which is a hydroxy-functional polyacrylate based on 2-ethylhexyl acrylate, styrene and 2-hydroxyethyl methacrylate and has, OH number 140 mg KOH / g, OH equivalent weight 400 and solids content 80% in n-butyl acetate (from BASF).

The poly(meth)acrylate polyol **PA** is used in an amount ranging from 12 - 32 wt.-%, preferably 13.5 - 30 wt.-%, based on the total weight of the multi-component composition.
It has been observed that the amount of the poly(meth)acrylate polyol PA less than 12 wt.-% provide poor adhesion of the cured composition on the substrate and more than 32 wt.-% provide brittleness of the cured composition.

Preferably, the multi-component composition of the present invention comprises less than 15 wt.-%, preferably less than 10 wt.-%, less than 7.5 wt.-%, less than 5 wt.-%, more preferably less than 2.5 wt.-%, of other polyols, especially polyether/polyester polyols, based on the total weight of the multi-component composition.

### Melamine formaldehyde resin

The multi-component composition of the present invention comprises at least one melamine formaldehyde resin.

The melamine formaldehyde resin is etherified with one or more groups derived from an alkyl alcohol. Preferred melamine formaldehyde resins comprise mixed alkyl groups in the same melamine formaldehyde molecule. Mixed alkyl groups comprise at least two different C1-C6 (preferably C1-C4) alkyl groups, for example, methyl and butyl. Preferred, mixed alkyl groups comprise at least two alkyl chains having a differential of at least 2-carbon atoms such as methyl and propyl. More preferably a 3-carbon atom differential such as methyl and butyl.

Preferred melamine formaldehyde resins are based on melamine formaldehyde molecules that involve a melamine alkylated with at least three, four, preferably with five and more preferably six formaldehyde molecules to yield methanol groups such as hexamethylolmelamine. At least two, preferably three or four, and more preferably five or six of the methanol groups are etherified.

Preferably, melamine formaldehyde molecule can contain mixed alkyl chains etherified along with one or more non-etherified methanol groups (known as methylol groups). More preferably, fully etherified groups are preferred to provide essentially six etherified alkyl groups.

Mixed melamine formaldehyde resins can be produced in much the same way as conventional mono- melamine formaldehyde resin, where subsequently all or most methylol groups are etherified, such as in hexamethyoxymethylmelamine (HMMM). Mixed melamine formaldehyde resin can be produced preferably by simultaneous coetherification of both alcohols and more preferably by step-wise addition of two different lower alkyl alcohols. Typically, lesser equivalents of the first etherified alcohol relative to the available methylol equivalents of melamine formaldehyde are utilized first to assure deficient reaction of alkyl alcohol with available formaldehyde groups, while excess equivalents of the second alcohol are reacted relative to remaining equivalents of formaldehyde to enable full or nearly full etherification with both alcohols. In either or both alcohol etherification steps, reaction water can be removed by distillation, or by vacuum if necessary, to assure the extent of coetherification desired.

Preferably, melamine formaldehyde resin comprises methoxymethyl and/or methoxybutyl groups preferably in a weight ratio ranging from 0-100:100-0, and more preferably, in a weight ratio ranging from 80:20 to 100:0, or from 90:10 to 100:0, or from 80:20 to 95:5, or from 92.5:7.5 to 100:0, or from 95:5 to 100:0. More preferably, melamine formaldehyde resin comprises mixed alkylether melamine, e.g. a hexamethoxy(methyl butyl) melamine, or a mixture of hexamethyoxymethylmelamine (HMMM) and hexamethoxybutyl melamine.

Preferred melamine formaldehyde resin has an average degree of polymerization of less than 1.4. and more preferably, less than 1.2.

Most preferred, commercially available melamine formaldehyde resin is Resimene™ CE-7103 resin (hexamethoxymethyl/n-butyl-melamine formaldehyde resin, solids content 98%, from Ineos Melamines, Germany). Resimene™ CE-7103 resin , is a mixed methyl and butyl alcohol etherified with melamine formaldehyde which has an average degree of polymerization of 1.15 and contains 10% of methoxybutyl groups, i.e. a weight ratio of methoxymethyl to methoxybutyl groups of 90:10.

The melamine formaldehyde resin is used in an amount ranging from 20 - 30 wt.-% based on the total weight of the multi-component composition.

### Suitable proportions for the composition

The weight ratio of the poly(meth)acrylate polyol PA / melamine formaldehyde resin used in the multi-component composition lies preferably in range of 0.33 - 1.5, more preferably 0.4 to 1.3.

### Catalyst

The multi-component composition comprises at least one catalyst, preferably an acid catalyst.

The acid catalyst provides high gloss, excellent weathering characteristics, outstanding exterior durability, and fast curing properties.

Examples of suitable acid catalysts include boric acid, phosphoric acid, sulfate acid, hypochlorides, oxalic acid and ammonium salts thereof, sodium or barium ethyl sulfates, sulfonic acids, dodecyl benzene sulfonic acid (DDBSA), amine-blocked alkane sulfonic acid such as MCAT 12195 catalyst (ATOFINA Chemicals, Inc.; Philadelphia, Pa.), amine-blocked dodecyl para-toluene sulfonic acid such BYK 460 catalyst (BYK-Chemie USA; Wallingford, Conn.), and amine-blocked dodecyl benezene sulfonic acid such as Nacure™ 5543 catalyst (King Industries, Inc.; Norwalk, Conn.).

Examples of other suitable acid catalysts for catalyzing the crosslinking reaction are preferably para-toluene sulfonic acid (PTSA) or methyl sulfonic acid (MSA), more preferably, para-toluene sulfonic acid (PTSA).

Example of commercially available acid catalyst is K-CURE 1040, solution of 40 % para-Toluenesulfonic acid (p-TSA) in isopropanol (from King Industries).

Preferably, the amount of catalyst, preferably an acid catalyst, is 0.5 - 3.5 wt.-%, preferably 0.5 - 2.5 wt.-%, 1.0 - 2.0 wt.-%, 1.2 - 2.0 wt.-%, based on the total weight of the multi-component composition.

Catalyst used in an amount less than 0.5 wt.-% is not very suitable with respect to the curing of the composition and used in an amount more than 3.5 wt.-% provide wrinkle formation of the cured composition.

### Core-shell particles

The multi-component composition of the present invention comprises core-shell particles having a core containing a cross-linked elastomeric core and a shell containing reactive groups.

Core-shell particles provide physical strength (tear and tensile), even at very low temperatures, surface quality (reduced coefficient of friction) and higher abrasion resistance.

The core is preferably composed of polysiloxane, polybutadiene or other elastomeric material, more preferably the core is composed of polysiloxane. The core is a preferentially crosslinked polyorganosiloxane that may include dialkylsiloxane repeating units, where"alkyl"is C1-C6 alkyl and more preferably includes dimethylsiloxane repeating units.

The reactive groups preferably include epoxy groups, oxetane groups, ethylenically unsaturated groups, and/or hydroxy groups. For example, the reactive groups may include oxirane, glycidyl, vinyl ester, vinyl ether, or acrylate groups, or combinations thereof.

Preferably, the core-shell have a particle size from 0.01 to 100 µm, more preferably from 0.01 to 10 µm, most preferably from 0.1 to 10 µm.

Preferred commercially available core-shell particles are Albidur® EP 2240 , Albidur® EP 2240 A, Albidur® EP 5340, Albidur® UP 6140, Albidur® VE 3320, ALBIDUR® PU 5640 having silicone content 40 % in polypropyleneglycol-triol, OH value 220-240 (from Evonik).

Preferably, the amount of core-shell particles is 0.4 - 10.0 wt.-%, preferably 0.6 - 8.8 wt.-%, 0.8 - 6.0 wt.-%, 1.0 - 4.0 wt.-%, 1.0 - 2.0 wt.-%, based on the total weight of the multi-component composition.

Core-shell particles used in an amount less than 0.4 wt.-% leads to the reduction of the coefficient of friction and used in an amount more than 10.0 wt.-% provide poor adhesion to the substrates.

### Solvent

The multi-component composition of the invention further includes a solvent.

Examples of suitable solvents include C3-C15 ketones, e.g., MEK or methyl isobutyl ketone; C3-C20 alkylene glycols and/or alkylene glycol alkyl ethers; acetates (including n-butyl and n-propylacetates) and their derivatives; ethylene carbonate; etc.

Suitable alcohol solvents include C1-C8 monoalcohols such as methyl, ethyl, propyl, butyl alcohols, as well as cyclic alcohols such as cyclohexanol.

Preferably, examples of solvents includes halogenated solvents, trifluoromethyl-based solvents, more preferably 1-chloro-4-(trifluoromethyl)benzene. Most preferably, the solvent is selected from the list containing C3-C20 alkylene glycols and halogenated solvents. For example 1-chloro-4-(trifluoromethyl)benzene (PCBTF), 2-Butoxyethanol (Butyl glycol).

The amount of solvent(s) in the multi-component composition can vary widely depending on the composition viscosity desired for application purposes, and solubility of the components in the solvent. Preferably, the solvent is used in an amount ranging from 10 - 70 wt.-%, more preferably 20 - 60 wt.-%, 30 - 50 wt.-%, based on the total weight of the multi-component composition.

### Application Areas

The multi-component coating composition of the present invention is applicable to substrates for providing abrasion resistance, impact resistance, excellent adherence to substrates and low coefficient of friction.

The space provided to apply the multi-component coating composition of the present invention can be made of any convenient material selected from the group consisting of melamine formaldehyde resin, polyurethane, polyurea, epoxy resin and metal, preferably melamine formaldehyde resin

Preferably, the substrate is a part of a flooring system, more preferably a bowling lane.

### Methods of Applying the Top Coat Formulations

The multi-component coating composition of the present invention can be applied on a floor substrate by variety of application techniques. Some of the suitable techniques include brushing, spraying, dipping and flow coating. Other suitable techniques include doctor blade, drawbar applicator and lane finish applicator.

One or several coats may be applied by allowing each coat to dry under ambient conditions before applying another coat. It is preferred that the coatings should be applied to the substrate preferably at a thickness of 25 um.

In the following section the above-described invention is further discussed with the help of Figures.

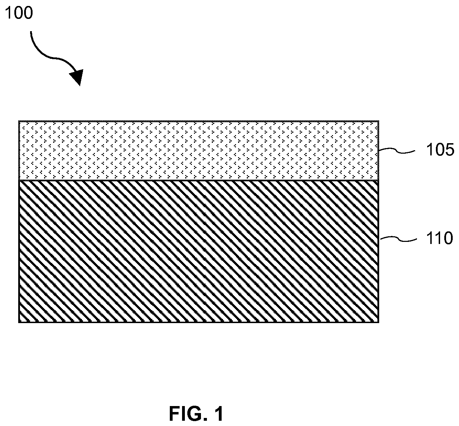

Figure 1 depicts the overall construction of the coated substrate 100 obtained by applying a multi-component coating composition 105 in accordance with the preferred embodiments of the invention.

The multicomponent coating composition 105 is applied as a top coat on the substrate 110 to obtain a coated substrate 100. A direct contact exists between the substrate 110 and the multi-component coating composition 105.

The multi-component composition 105 is used as a top coat is obtained by mixing the components of the multicomponent composition in accordance with preferred embodiments of the invention. The multi-component coating composition 105 is applied on the substrate 110 by using any of the standard floor coating techniques.

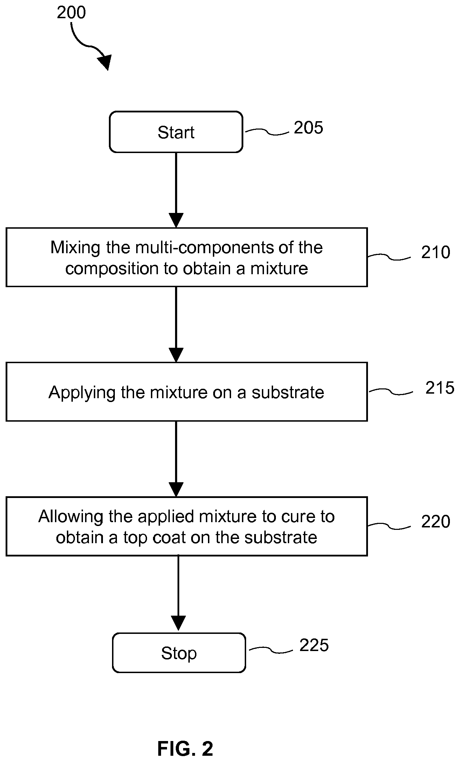

Figure 2 is a flow chart for a method for preparing a coated substrate. The method 200 starts at step 205.

At step 206, the components of the multi-component coating are mixed to obtain a mixture (i.e. a multicomponent coating composition 105).

At step 207, the mixture is applied on the substrate.

At step 208, the applied mixture is allowed to cure in order to obtain a top coat on the substrate.

The process 200 ends at step 209.

All process steps are well versed in the art and can be carried out in the usual way. Details of the components and process steps have already been explained above.

### Examples

Set out below are examples that further illustrate the invention but are in no way intended to restrict the scope of the invention.

**Table 1 outlines the starting materials used for preparing the multi-component coating composition of the invention and reference examples, indicating all the detailed information:**

| | **Description** |
|---|---|
| **Poly(meth)acrylate polyol PA** | Joncryl 507 (from BASF) |
| **Melamine-formaldehyde resin** | Resimene CE7103 (from Ineos Melamines, Germany). |
| **Catalyst** | K-CURE 1040 (from King Industries). |
| **Core-shell particle** | ALBIDUR® PU 5640 (from Evonik). |
| **Solvent** | 1-chloro-4-(trifluoromethyl)benzene (PCBTF) 2-Butoxyethanol (Butyl glycol) |
| **Polyether-ester polyol** | Sovermol® ( BASF) |
| **Defoamer** | BYK 088 |
| **Polyethylene wax** | BYK 230 |

**Table 2 outlines a number of examples of multi-component coating composition that are prepared using this general procedure, indicating all proportions and percentage by weight:**

| | **Ref.1** | **Ref.2** | **Ref.3** | **Ref.4** | **Ref.5** | **Ref.6** | **Ex.1** | **Ex.2** |
|---|---|---|---|---|---|---|---|---|
| Johncryl | 0 | 0 | 3.17 | 9.09 | 12.14 | 26.59 | 17.37 | 35 |
| Sovermol | 3.3 | 20.82 | 10.45 | 0 | 9.82 | 11.71 | 0 | 0 |
| Resimene | 25 | 25 | 25 | 25 | 25 | 25 | 25 | 25 |
| Albidur | 35 | 17.48 | 24.68 | 29.21 | 16.34 | 0 | 20.93 | 3.3 |
| BYK 230 | 1 | 1 | 1 | 1 | 1 | 1 | 1 | 1 |
| BYK 088 | 0.2 | 0.2 | 0.2 | 0.2 | 0.2 | 0.2 | 0.2 | 0.2 |
| Bytyl glycol | 16.5 | 16.5 | 16.5 | 16.5 | 16.5 | 16.5 | 16.5 | 16.5 |
| PCPTF | 15 | 15 | 15 | 15 | 15 | 15 | 15 | 15 |
| KCURE | 4 | 4 | 4 | 4 | 4 | 4 | 4 | 4 |
| Total wt.-% | 100 | 100 | 100 | 100 | 100 | 100 | 100 | 100 |

**Table 3 outlines the solid content percentage in the multi-component coating:**

| | **Ref.1** | **Ref.2** | **Ref.3** | **Ref.4** | **Ref.5** | **Ref.6** | **Ex.1** | **Ex.2** |
|---|---|---|---|---|---|---|---|---|
| Johncryl | 0 | 0 | 2.54 | 7.27 | 9.71 | 21.27 | 13.90 | 28 |
| Albidur | 14.0 | 7.0 | 9.9 | 11.7 | 6.5 | 0 | 8.4 | 1.3 |
| KCURE | 1.6 | 1.6 | 1.6 | 1.6 | 1.6 | 1.6 | 1.6 | 1.6 |

### Preparation method:

For preparing each one of the references and examples, the starting raw materials of multi-component coating composition is indicated in Table 1, in the indicated quantities (in-parts by weight) are mixed to form a mixture. The weight ratio of the poly(meth)acrylate polyol PA / melamine formaldehyde resin used in the multi-component coating composition lies more preferably in the range of 0.4 to 1.3. The obtained mixture is applied as a top coat on the substrate. The coating is applied on the substrate preferably at a thickness of 25 um. The coated substrate is left to dry.The coating procedure is repeated untill the desired number of coats are applied to substrate. Various tests are performed for the determination of parameters like curing speed test, co-efficient of friction, impact resistance, adhesion test and viscosity.

### Determination of various parameters:

### Curing speed Test:

ASTM D 5895 tester (Standard Test Methods for Evaluating Drying or Curing During Film Formation of Organic Coatings Using Mechanical Recorders) is used to determine drying or curing time of the applied coating. The time can be recorded in three stages as set to touch time (tough dry time), tack free time and dry-hard time. The curing speed of the multi-component coating is particularly less than 30 minutes, more particularly lies in range of 5 to 2.5 min determined by ASTM D 5895.

### Test Method of Co-Efficient of Friction (COF)

The multi-component coating, according to the present invention, has a static coefficient of friction particularly less than 0.3, 0.1 or 0.05 more particularly zero as measured by the ASTM D2047 (Standard Test Method for Static Coefficient of Friction of Polish-Coated Flooring Surfaces). The "James Machine" is used to evaluate quantitatively the static coefficient of friction (SCF) of floor finish determined by ASTM D2047 Standard Test Method.

### Test Method of Impact Resistance

ASTM D 2794 is an impact tester used for the determination of impact resistance, deformability and elongation of coatings and substrates as well as adhesion of the coating. The general procedure for evaluating the effect of deformation on a coated substrate comprises of following steps:
Firstly, the coating under test is applied on suitable substrate. After the coating has cured, a standard weight is dropped from a suitable distance to strike an indenter that deforms the coating and the substrate. The indentation can be either an intrusion or an extrusion. By gradually increasing the distance of the weight drops, generally 1 inch (25 mm) at a time, the point at which failure usually occurs can be determined. Films generally fail by cracking, which is made more visible by the use of a magnifier, by the application of a copper sulfate (CuSO4) solution on steel, or by the use of a pin hole detector.

General procedure is followed in predicting the impact resistance. Preferably, the substrate is a wood piece and thickness of the coating film on the substrate is 25 um. Preferably, the standard weight dropped on the substrate is 4 pounds and height of drop is 42 inches (106 cm). The impact value of the multi-component coating is particularly greater than or equal to 7, more particularly equal to 10, determined by ASTM D2794 test.

### Adhesion Test:

Further for the coatings to perform satisfactorily, they must adhere to the substrates on which they are applied. A variety of recognized methods can be used to determine how well a coating is bonded to the substrate. Commonly used measuring techniques are with a knife, a tape test, a pull-off adhesion tester and with a scrape tests. After performing the test, the bond failure is recorded, may be adhesive (failure at the coating / substrate interface) or cohesive (failure within the coating film or the substrate).

Scrape test is used to determine how well a coating is bonded to the substrate. ASTM D2197 (Standard Test Method for Adhesion of Organic Coatings by Scrape Adhesion) is the scrape-adhesion tester for testing adhesion of organic coatings such as paint, varnish, and lacquer when applied to smooth, flat surfaces. The test method is useful in differentiating the degree of adhesion of coatings to substrates. The test is performed in a laboratory and adhesion is determined by pushing the coated substrate beneath a rounded stylus or loop that is loaded in increasing amounts until the coating is removed from the substrate surface. The adhesion value of the multi-component coating is particularly greater than or equal to 7, more particularly equal to 10, determined by ASTM D2197.

### Measurement of Viscosity:

The viscosity of the resulting multi-component coating is measured on a Brookfield Viscometer (Model DV1). The viscosity of the multi-component coating is preferably less than or equal to 100cp, more preferably lies in range from 50cp to 60cp in accordance with Brookfield Digital Viscometer DV-1.

**Table 4 outlines the various parameters of the multi-component coating are measured:**

| | **Ref.1** | **Ref.2** | **Ref.3** | **Ref.4** | **Ref.5** | **Ref.6** | **Ex.1** | **Ex.2** |
|---|---|---|---|---|---|---|---|---|
| Coefficient of friction | 0 | 0 | 0 | 0 | 0 | 0.3 | 0 | 0 |
| Impact | 5 | 6 | 7 | 8 | 6 | 9 | 9 | 10 |
| Adhesion | 0 | 0 | 6 | 0 | 7 | 10 | 8 | 10 |
| Cure speed (min) | 4 | 4.5 | 5 | 3 | 4 | 2.5 | 3 | 2.5 |
| Viscosity (cP) | 62 | 53 | 55 | 62 | 53 | 53 | 62 | 63 |

In order to test the performance characteristics of the inventive multi-component coating composition of the present invention over the coating compositions of the prior art a series of coating formulations are prepared. The details of the components and contents of the reference examples and the inventive coating compositions of the present invention are outlined in Table 3. The test results and/or parameter values are summarized in Table 4.

The reference 1 and reference 2 contains only additional polyester/polyether polyols (Sovermol) in an amount of 3.3% and 20.82% respectively. The reference example 1 and reference example 2 differs from the inventive examples with regards to the presence of poly(meth)acrylate polyol PA (Johncryl) and an additional polyester/polyether polyol (Sovermol). It has been observed that the reference 1 and 2 provides very low impact and the adhesion values in comparison with inventive examples 1 and 2.

Reference 3 and 5 contains poly(meth)acrylate polyol PA (Johncryl) and additional polyols (Sovermol), shows improved adhesion values as compared to References example 1 and 2. Moreover, Reference 5 contains poly(meth)acrylate polyol PA (Johncryl) in an amount of 12.14% and 9.82% additional polyols (Sovermol), shows adhesion value equal to 7 and impact value equal to 6. Reference 3 contains 3.17% Johncryl and 10.45% Sovermol, shows impact value equal to 7 and adhesion value equal to 6. Thus, it is evident that on increasing the amount of Johncryl in the composition, adhesion values are improved. As found in practical experiments, these compositions can be used on the substrate without any problem.

Reference 4 composition contains 9.09 % of poly(meth)acrylate polyol PA (Johncryl) and no additional polyester/polyether polyol are added, shows very low adhesion value and high impact value.

The reference 6 composition which contains higher amount of poly(meth)acrylate polyol PA without polyester/polyether polyol and core-shell particle (Albidur), shows high coefficient of friction value equal to 0.3

The inventive multi-component coating composition Example 1 of the present invention which contains higher amount of poly(meth)acrylate polyol PA, core-shell particle (Albidur) and is obtained without addition of polyester/polyether polyol shows improved properties. The multi-component coating results in better performance as depicted by increased adhesion value equal to 9 and impact value equal to 8.

The inventive multi-component coating composition Example 2 of the present invention is obtained without addition of polyester/polyether polyol, contains higher amount of poly(meth)acrylate polyol PA and core-shell particle (Albidur). The multi-component coating results obtained by using the coating composition of example 2 results in excellent performance as depicted by increased adhesion value equal 10 and impact value equal to 10.

The superior performance characteristics of the inventive example 1 and example 2 as cited in Table 3, clearly shows the superiority of the coating composition of the present invention over the prior art. Thus, inventive multi-component coating composition of the present invention is more suitable for the use on the substrates, especially as a coating for synthetic bowling lane surface.

## Claims

1. A multi-component composition containing
a) 12 - 32 wt.-%, preferably 13.5 - 30 wt.-%, based on the total weight of the multi-component composition, of at least one poly(meth)acrylate polyol **PA**; 20 - 30 wt.-% based on the total weight of the multi-component composition, of at least one melamine formaldehyde resin; and
b) at least one catalyst,
wherein the multi-component composition further comprises
1 - 25 wt.-%, preferably 1 - 22 wt.-%, 1 - 15 wt.-%, 1 - 10 wt.-%, 2 - 5 wt.-%, core-shell particles, based on the total weight of the multi-component composition.

2. The multi-component composition according to claim 1, wherein the multi-component composition further contains 10 - 70 wt.-%, preferably 20 - 60 wt.-%, 30 - 50 wt.-%, based on the total weight of the multi-component composition, of at least one solvent.

3. The multi-component composition according to claim 2, wherein the solvent is selected from the list containing C3-C20 alkylene glycols and halogenated solvents.

4. The multi-component composition according to any one of the preceding claims, wherein the melamine formaldehyde resin comprises methoxymethyl and/or methoxybutyl groups, preferably methoxymethyl and methoxybutyl groups.

5. The multi-component composition according to any one of the preceding claims, wherein the melamine formaldehyde resin is based on hexamethylolmelamine.

6. The multi-component composition according to any one of the preceding claims, wherein the weight ratio of the poly(meth)acrylate polyol **PA** / melamine formaldehyde resin is from 0.33 - 1.5, preferably 0.4 to 1.3

7. The multi-component composition according to any one of the preceding claims, wherein the amount of the catalyst, preferably an acid catalyst, is 0.5 - 3.5 wt.-%, preferably 0.5 - 2.5 wt.-%, 1.0 - 2.0 wt.-%, 1.2 - 2.0 wt.-%, based on the total weight of the multi-component composition.

8. The multi-component composition according to any one of the preceding claims, wherein the core of the core-shell particles is composed of polysiloxane.

9. A method for preparing a coated substrate, comprising
i) mixing the components of a multi-component composition according to any one of claims 1 to 8 to obtain a mixture,
ii) applying the mixture on the substrate, and
iii) allowing the applied mixture to cure to obtain a top coat on the substrate.

10. The method of claim 9, wherein the substrate is a flooring, preferably a bowling lane.

11. The method of claim 9 or claim 10, wherein the substrate is selected from the list consisting of melamine formaldehyde resin, polyurethane, polyurea, epoxy resin and metal, preferably melamine formaldehyde resin.

12. The method according to any one of claims 9 to 11, wherein the substrate is part of a flooring system, especially a bowing lane, the substrate preferably being a melamine formaldehyde resin laminate.

13. A coated substrate, obtainable by a method according to any one of claims 9 to 12.

14. Use of a multi-component composition according to any one of claims 1 to 8 as top coating for a substrate, wherein the substrate is preferably part of a flooring system, preferably a bowling lane.
